# EUROPÄISCHE PATENTSCHRIFT

(11) **EP 0 766 508 B1**
(45) Veröffentlichungstag und Bekanntmachung des Hinweises auf die Patenterteilung: **22.07.1998**
(21) Anmeldenummer: 95924297.5
(22) Anmeldetag: 20.06.1995
(51) Int. Cl.: A01G 3/025

(54) **VORRICHTUNG FÜR AN EINEM STIEL BEFESTIGTE HANDWERKZEUGE**
DEVICE FOR HAND TOOLS SECURED TO A PILLAR
DISPOSITIF POUR OUTILS A MAINS FIXES A UN MANCHE

(30) Priorität: 21.06.1994 DE 4421659
(43) Veröffentlichungstag der Anmeldung: 09.04.1997
(73) Patentinhaber: WOLF-Geräte GmbH Vertriebsgesellschaft KG, D-57518 Betzdorf/Sieg (DE)
(72) Erfinder: SCHNEIDER, Manfred, D-66606 St. Wendel (DE); STAUDT, Gerhard, D-66839 Schmelz (DE)
(74) Vertreter: Koch, Günther, Dipl.-Ing.
(86) Internationale Anmeldenummer: EP9502390
(87) Internationale Veröffentlichungsnummer: WO9535023

(56) Entgegenhaltungen:
- CH-A- 582 464
- GB-A- 1 132 800
- GB-A- 2 143 460
- US-A- 2 259 642

## Beschreibung

Die Erfindung bezieht sich auf einen Ziehgriff für ein Zugseil, über das ein am Ende eines Stiels befestigtes Werkzeug, insbesondere eine Baumschere oder ein anderes zum Entasten oder Beschneiden von stehenden Bäumen geeignetes Werkzeug, betätigbar ist, wobei der Ziehgriff einen Durchgangskanal und eine Klemmvorrichtung für das Zugseil aufweist.

Derartige Ziehgriffe, die an jeder Stelle eines Zugseils festklemmbar sind, haben gegenüber den fest am Seil angeordneten Ziehgriffen den Vorteil, daß der Benutzer den am Zugseil ansetzenden Ziehgriff immer in der ergonometrisch günstigsten Weise zur Verfügung hat.

Ein gattungsgemäßer, längs des Zugseils verstellbarer, Ziehgriff ist durch die GB 21 43 460 A bekannt. Hierbei ist der Durchgangskanal geknickt ausgebildet, d.h. er besitzt ein senkrecht zur Grifffläche versehenes Seileintrittsloch, das in einem rechten Winkel in eine Bohrung übergeht, welche einseitig innerhalb des Griffs nach außen geführt ist und an der Hinterseite des Griffes in eine V-förmige Kerbe übergeht, in der das Seil eingeklemmt werden kann. Zur Festlegung des Ziehgriffes am Seil muß dieser mit der einen Hand festgehalten werden, während die andere Hand das Seil in die V-förmige Kerbe einschiebt. Beim Verstellen der Seilzugslänge muß das Seil seitlich des Griffes gehalten werden, um ein unbeabsichtigtes Festklemmen zu verhindern. Zum Lösen der Klemmvorrichtung muß das Seil seitlich aus der V-förmigen Kerbe herausgehoben werden, was Schwierigkeiten bereiten kann, wenn das Seil unter Spannung steht und/oder die Ränder der Klemmkerbe sich in das Seil eingegraben haben.

Der Erfindung liegt die Aufgabe zugrunde, einen einfach ausgebildeten Ziehgriff zu schaffen, der eine vereinfachte Bedienung ermöglicht.

Gelöst wird die gestellte Aufgabe durch die im Kennzeichnungsteil des Patentanspruchs 1 angegebenen Merkmale. Durch die Ausbildung der Klemmvorrichtung wird erreicht, daß diese bereits bei einer Schrägstellung des Ziehgriffs wirksam wird, ohne daß es notwendig wäre, das Seil manuell in die Klemmeinrichtung einzuführen. Diese Festklemmung kann sogar durch Einhandbedienung bewirkt werden, so daß die andere Hand frei ist und den Stiel mit dem Werkzeug halten kann, das durch das Zugseil betätigt wird.

Das durch die Klemmrippen in einer Winkelsegmentausnehmung festgeklemmte Seil kann auf einfache Weise durch seitlichen Zug aus der Klemmvorrichtung herausgezogen werden, so daß es wieder frei am Seil entlanggeführt werden kann. Um diese Lösung der Klemmvorrichtung und Freigabe des Seils weiter zu erleichtern, ist gemäß einer Ausgestaltung der Erfindung eine manuell betätigbare Auslösevorrichtung vorgesehen, mit der das Seil noch bequemer und in Einhandbedienung aus den Klemmrippen ausgehoben werden kann. Diese in den Ansprüchen 3 bis 7 gekennzeichnete Auslösevorrichtung besteht aus einer Auslösehülse, die in dem nach oben durch eine Lagerhülse verlängerten Durchgangsloch für das Seil geführt ist und in den Bereich der Winkelsegmentausnehmung einschiebbar ist. Diese Auslösehülse ist mit einem Fingergriff versehen, so daß sie bequem mit einer Hand gegen die Kraft der Rückholfeder in den Winkelsegmentbereich eingeschoben werden kann.

Durch die Merkmale des Anspruchs 8 wird erreicht, daß das Zugseil mit dem Ziehgriff immer in erreichbarer Nähe des Stiels gehalten wird. Dadurch wird die Einstellung des Ziehgriffs längs des Seils durch Einhandbedienung erleichtert, weil das Seilende im unteren Bereich durch die Aufspulvorrichtung straff gehalten wird, was die seitliche Einklemmung des Ziehgriffs erleichtert.

Durch die Ausgestaltung gemäß Anspruch 9 wird erreicht, daß der Stiel über das Aufspulgehäuse bequem am Körper abgestützt werden kann, wobei die Weichgummieinlage ein Abrutschen am Körper verhindert und unangenehme Druckstellen vermeidet.

Nachstehend werden Ausführungsbeispiele der Erfindung anhand der Zeichnung beschrieben. In der Zeichnung zeigen:

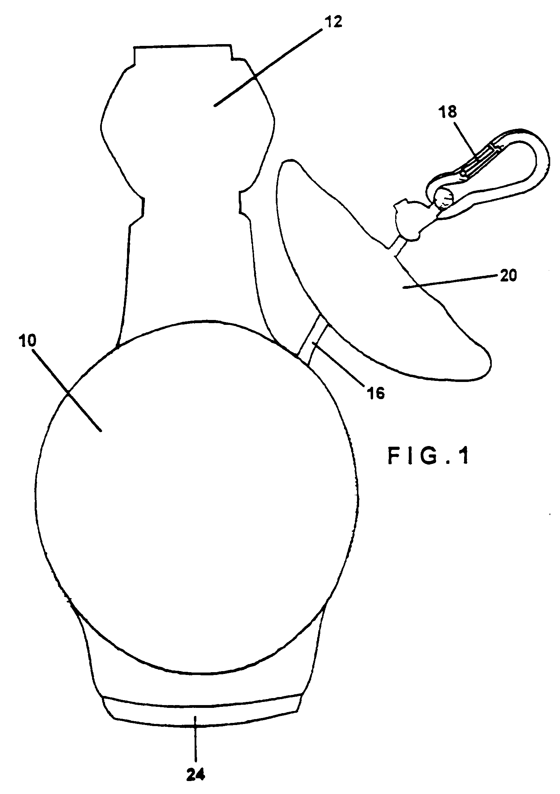

Fig. 1 eine schematische Darstellung eines das Zugseil aufnehmenden Seildepots mit Ziehgriff;
Fig. 2 eine Seitenansicht des Ziehgriffs;
Fig. 3 einen Schnitt nach der Linie III-III gemäß Fig. 2;
Fig. 4 eine Ansicht des Ziehgriffs gemäß Fig. 2 von oben betrachtet;
Fig. 5 eine Funktionsdarstellung des Ziehgriffs;
Fig. 6 eine Ansicht einer abgewandelten Ausführungsform des Ziehgriffs;
Fig. 7 eine Ansicht des Seildepots;
Fig. 8 einen Schnitt nach der Linie VIII-VIII gemäß Fig. 7;
Fig. 9 einen Schnitt nach der Linie IX-IX gemäß Fig. 7;
Fig. 10 eine Schnittansicht des erfindungsgemäßen Ziehgriffs mit Auslösevorrichtung;
Fig. 11 einen gegenüber Fig. 10 um 90° verdrehten Teilschnitt des Ziehgriffs;
Fig. 12 den in Fig. 10 dargestellten Ziehgriff in gedrückter Auslösestellung;
Fig. 13 eine der Fig. 11 entsprechende Teilschnittansicht in gedrückter Stellung der Auslösevorrichtung.

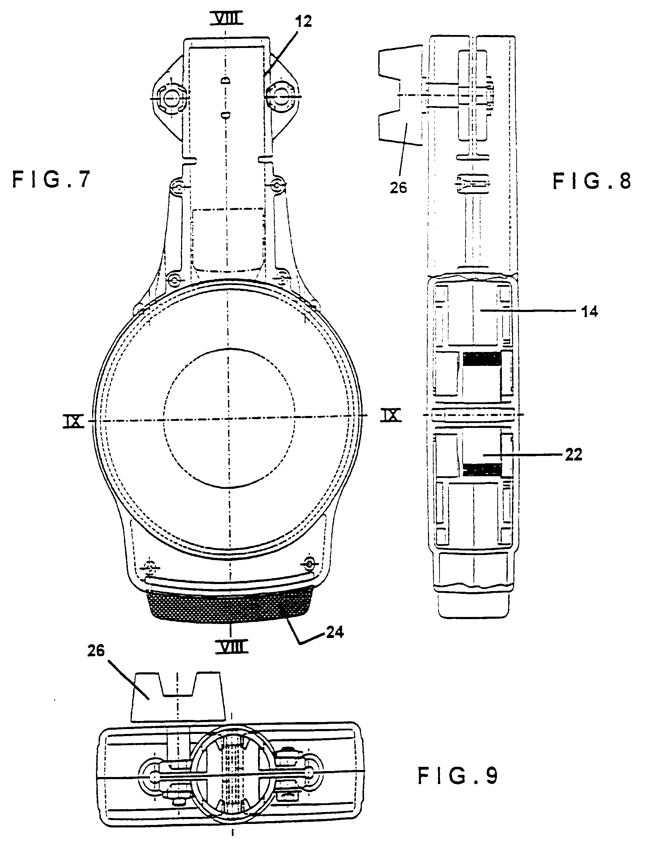

Die erfindungsgemäße Vorrichtung weist ein Seildepot, bestehend aus einem Gehäuse 10 mit Seilspule und Stielbefestigungshülse sowie einen Ziehgriff 20 für das Zugseil 16 auf, das auf der Seilspule 14 (Fig. 8) innerhalb des Gehäuses 10 mittels einer Spiralflachfeder 22 aufwickelbar ist. Das Ende des Zugseils weist einen Karabinerhaken 18 auf, mit dem das Zugseil an dem Handschneidwerkzeug einhängbar ist. Das Zugseil 16 kann jedoch auch direkt mit dem Handschneidwerkzeug verbunden sein. Der Ziehgriff 20 kann auch ohne Seildepot in Verbindung mit einem lose herabhängenden Zugseil benutzt werden, wobei die Zugseil-Länge jeweils auf die für die Handhabung bequemste Stelle einstellbar ist. In Verbindung mit dem am Stielende festlegbaren Seildepot wird jedoch auch in Verbindung mit in der Länge ausfahrbaren Teleskopstielen gewährleistet, daß das Zugseil immer in der Nähe des Stiels mit dem Ziehgriff erfaßt werden kann.

Das Seildepot ist am unteren Ende mit einer Weichgummieinlage 24 versehen, mit der das Seildepot mitsamt dem in der Stielbefestigungshülse 12 eingesteckten Stiel durch den Körper als Widerlager abgestützt werden kann, wodurch ein Abrutschen verhindert wird, ohne daß unangenehme Druckstellen am Körper verursacht werden.

Mittels einer Klemmschraube 26 wird der in der Zeichnung nicht dargestellte Stiel unterschiedlichen Durchmessers, z.B. ein ausfahrbarer Teleskopstiel, am Seildepot festgeklemmt.

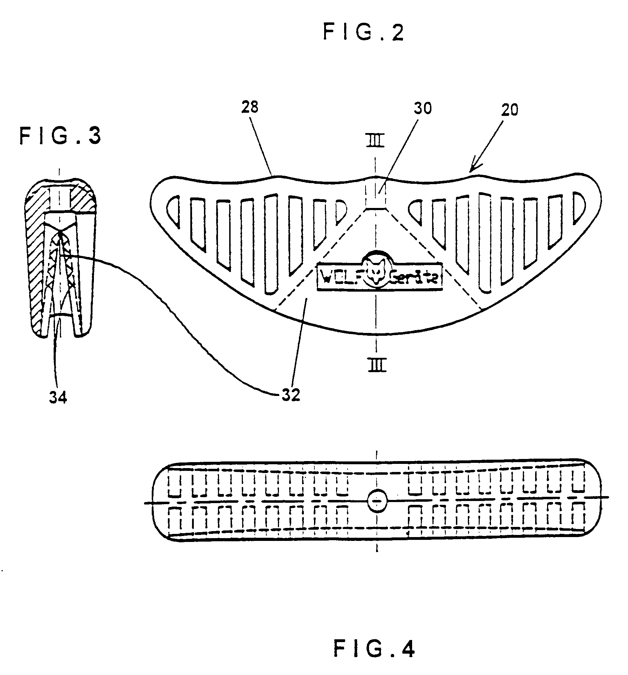

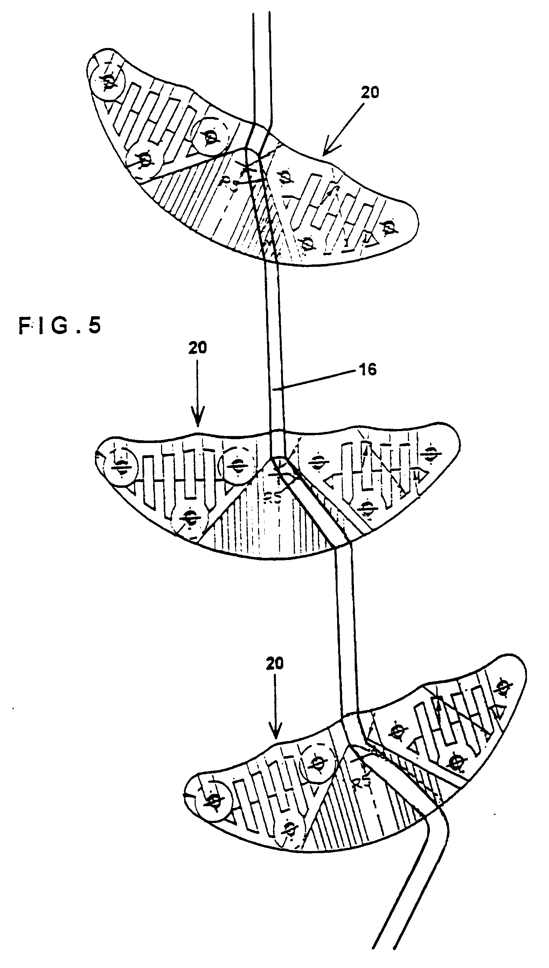

Der in den Fig. 2 bis 6 dargestellte Ziehgriff 20 ist so ausgebildet, daß er an jeder Stelle des Zugseils 16 derart festgelegt werden kann, daß mittels des Ziehgriffes das Zugseil betätigt werden kann. Der Ziehgriff 20 ist in Form eines Kreisabschnitts ausgebildet, der auf seiner Oberseite eine Fingergliedauflagefläche 28 aufweist. In der Mitte weist der Ziehgriff ein Durchgangsloch 30 für das Zugseil 16 auf, wodurch der Ziehgriff unverlierbar mit dem Zugseil verbunden bleibt. An das Durchgangsloch 30 schließt sich innen eine freie Winkelsegmentausnehmung 32 an, die seitlich mit Klemmrippen 34 ausgerüstet ist, die, wie aus Fig. 3 ersichtlich, nach dem Durchgangsloch 30 hin konvergieren. Wie aus der oberen Darstellung gemäß Fig. 5 ersichtlich ist, wird durch leichtes Kippen das Seil 16 zwischen den Klemmrippen 34 eingeklemmt. Zum Schneiden wird dann der Ziehgriff, wie aus der mittleren Darstellung gemäß Fig. 5 hervorgeht, unter einem Winkel von 90° zum Seil gehalten, um die Zugkraft in angenehmer Handstellung zu übertragen.

Zum Lösen wird das Seil, wie aus der untersten Darstellung gemäß Fig. 5 ersichtlich ist, unterhalb des Ziehgriffes 20 mit einer Hand festgehalten, und mit der anderen Hand wird der Griff kurz ruckartig nach oben bewegt, so daß das Seil aus den Klemmrippen 34 freikommt.

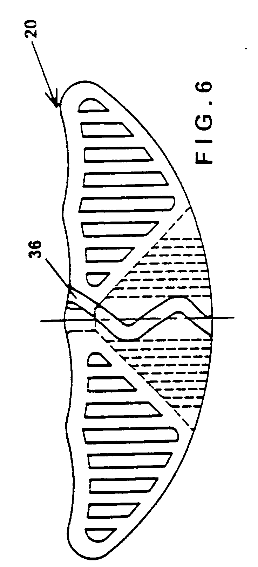

Die Fig. 6 weist eine abgewandelte Ausführungsform auf, bei der eine mäanderförmig geschwungene, nach außen hin offene Nut 36 rückseitig im Ziehgriff vorgesehen ist, in die ein an beiden Enden festgelegtes Seil an jeder beliebigen Stelle eingelegt werden kann. Die Nut geht in das Loch 30 über, sodaß der Ziehgriff fest mit dem Seil verbunden bleibt. Die Festlegung des Ziehgriffes erfolgt dann an jeder gewünschten Seilstelle durch Einklemmen zwischen den Klemmrippen 34, wie dies an Hand der Figur 5 beschrieben wurde.

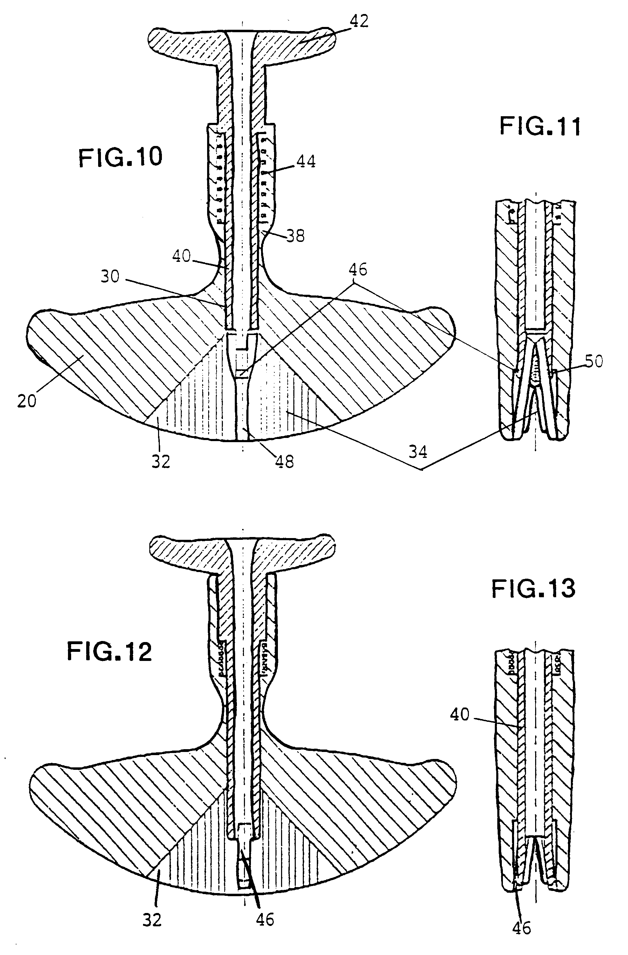

Die Fig. 10 bis 13 zeigen eine weitere Ausgestaltung des in den Fig. 2 bis 6 dargestellten Ziehgriffs. Der Ziehgriff 20 mit seiner Winkelsegmentausnehmung 32 und den Klemmrippen 34 entspricht der Darstellung gemäß Fig. 2 bis 5. Von diesem Ziehgriff unterscheidet sich der Ziehgriff gemäß Fig. 10 bis 13 durch eine Auslösevorrichtung, mit der das Zugseil bequem aus den Klemmrippen 34 ausgehoben werden kann. Zu diesem Zweck ist das zentrale Durchgangsloch 30 im Durchmesser erweitert, und der Ziehgriff ist nach oben in einer Lagerhülse 38 fortgesetzt, die zusammen mit dem Durchgangsloch 30 eine Auslösehülse 40 axial verschiebbar führt. Die Auslösehülse ist an ihrem äußeren Ende mit einem Fingergriff 42 versehen, mit dem die Hülse entgegen der Rückstellkraft einer Druckschraubenfeder 44 mit ihrem vorderen Ende in den Bereich der Winkelsegmentausnehmung eingeschoben werden kann, wie dies aus Fig. 12 und 13 ersichtlich ist, so daß das in den Fig. 10 bis 13 nicht dargestellte, durch die Hülse geführte Seil aus den Klemmrippen 34 ausgehoben werden kann. Die Druckschraubenfeder 44 ist einerseits an einer Schulter der Lagerhülse 38 und andererseits an einer Schulter der Auslösehülse abgestützt, wodurch der Fingergriff 42 mit der Auslösehülse in die aus Fig. 10, 11 ersichtliche Ausgangsstellung zurückgeführt wird, in der das durch die Auslösehülse 40 geführte Seil in die Klemmrippen 34 eingeführt und in diesen gehalten werden kann. Diese Ausgangsstellung wird durch zwei diametral gegenüberliegend angeordnete Schnapphaken 46 definiert, die am unteren Ende der Hülse 40 angeformt sind und in achsparallelen Nuten 48 der Winkelsegmentausnehmung 32 laufen. In der in Fig. 10 und 11 dargestellten Ausgangsstellung greifen die Schnapphaken 46 an einer Schulter 50 innerhalb der Nut an, so daß hierdurch ein weiteres Ausschieben durch die Kraft der Feder 44 verhindert ist. Ein besonderer Vorteil dieser Ausführungsform gemäß Fig. 10 bis 13 besteht darin, daß dieser Griff als Einhandgriff ausgebildet ist, d.h. er kann mit einer Hand durch Schrägstellen eingeklemmt werden und er kann durch Erfassen des Fingergriffs vom Seil durch Aufhebung der Klemmung gelöst werden.

### Bezugszeichenliste

- 10: Gehäuse
- 12: Stielbefestigungshülse
- 14: Seilspule
- 16: Zugseil
- 18: Karabinerhaken
- 20: Ziehgriff
- 22: Spiralflachfeder
- 24: Weichgummieinlage
- 26: Klemmschraube
- 28: Fingergliedauflagefläche
- 30: Durchgangsloch
- 32: Winkelsegmentausnehmung
- 34: Klemmrippen
- 36: mäanderförmig geschwungene Nut
- 38: Lagerhülse
- 40: Auslösehülse
- 42: Fingergriff
- 44: Druckschraubenfeder
- 46: Schnapphaken
- 48: Nuten
- 50: Schulter

## Patentansprüche

1. Ziehgriff (20) für ein Zugseil (16), über das ein am Ende eines Stiels befestigtes Werkzeug, insbesondere eine Baumschere oder ein anderes zum Entasten oder Beschneiden von stehenden Bäumen geeignetes Werkzeug, betätigbar ist, wobei der Ziehgriff (20) einen Durchgangskanal (30) und eine Klemmvorrichtung (32) für das Zugseil (16) aufweist,
dadurch gekennzeichnet, daß der Durchgangskanal als zentral angeordnetes Durchgangsloch (30) ausgebildet ist und die Klemmvorrichtung als Winkelsegmentausnehmung (32) ausgebildet ist, die innen an das Durchgangsloch (30) anschließt und seitlich nach dem Durchgangsloch hin konvergierende Klemmrippen (34) aufweist, und daß die konvergierenden Klemmrippen (34) seitlich in der Winkelsegmentausnehmung (32) derart angeordnet sind, daß der Ziehgriff bei Schrägstellung gegenüber dem Seil festgeklemmt wird.

2. Ziehgriff nach Anspruch 1,
dadurch gekennzeichnet, daß er eine mäanderförmig geschwungene, offene Nut (36) zum Einlegen eines Seils aufweist.

3. Ziehgriff nach Anspruch 1,
gekennzeichnet durch eine manuell betätigbare Auslösevorrichtung (40, 42), die das Seil (16) aus den Klemmrippen (34) der Winkelsegmentausnehmung (32) aushebt.

4. Ziehgriff nach Anspruch 3,
dadurch gekennzeichnet, daß im Durchgangsloch (30) eine das Zugseil (16) führende Auslösehülse (40) in den Bereich der Winkelsegmentausnehmung (32) einschiebbar ist.

5. Ziehgriff nach Anspruch 4,
dadurch gekennzeichnet, daß die durch eine Feder (44) in die Ausgangsstellung überführbare Auslösehülse (40) mit einem Fingergriff (42) verbunden ist.

6. Ziehgriff nach Anspruch 5,
dadurch gekennzeichnet, daß an den Ziehgriff (20) eine Lagerhülse (38) angeformt ist, die die Auslösehülse (40) führt und an einer Ringschulter die als Schraubenfeder (44) ausgebildete Rückholfeder abstützt, deren anderes Ende von einer Schulter der Auslösehülse (40) abgestützt ist.

7. Ziehgriff nach den Ansprüchen 3 bis 6,
dadurch gekennzeichnet, daß das vordere Ende der Auslösehülse (40) Schnapphaken (46) trägt, die in Nuten (48) der Winkelsegmentausnehmung (32) gleiten und in Auslösestellung an einer Schulter der Winkelsegmentausnehmung abgestützt sind.

8. Vorrichtung mit einem Ziehgriff nach Anspruch 1,
gekennzeichnet durch eine an einem Stiel, insbesondere an einem Teleskopstiel, festlegbare Aufspulvorrichtung für das über den Ziehgriff (20) betätigbare Zugseil (16), die eine Stielbefestigungshülse (12) zum Einsatz des unteren Stielendes und eine unter Federvorspannung stehende Seilspule (14) innerhalb ihres Gehäuses (10) aufweist.

9. Vorrichtung nach Anspruch 8,
dadurch gekennzeichnet, daß am Unterteil des Aufspulgehäuses (10) eine Weichgummieinlage (24) vorgesehen ist.

## Claims

1. Pulling handle (20) for a traction rope (16), via which a tool fixed to the end of a stick, in particular branch-cutting shears or other tool suitable for branch-cutting or pruning standing trees, can be operated, with the pulling handle (20) having a through channel (30) and a clamping device (32) for the traction rope (16),
characterized in that the through channel is designed as a centrally located through hole (30) and the clamping device is designed as an angled segment recess (32) which on the inside has a through hole (30) opening into it, and which on the sides has clamping ribs (34) converging towards the through hole, and that the converging clamping ribs (34) are located laterally in the angled segment recess (32) in such a way that the pulling handle is firmly clamped in an oblique position in relation to the rope.

2. Pulling handle in accordance with claim 1,
characterized in that it has a meander-shaped curved open groove (36) for placing a rope in.

3. Pulling handle in accordance with claim 1,
characterized by a manually operable release device (40, 42) which lifts the rope (16) out of the clamping ribs (34) of the angled segment recess (32).

4. Pulling handle in accordance with claim 3,
characterized in that in the through hole (30), a release bush (40), which guides the traction rope (16), can be pushed into the area of the angled segment recess (32).

5. Pulling handle in accordance with claim 4,
characterized in that the release bush (40), which can be put into the starting position by means of a spring (44), is connected with a finger grip (42).

6. Pulling handle in accordance with claim 5,
characterized in that moulded onto the pulling handle (20) is a bearing bush (38) which guides the release bush (40) and which supports, on a ring shoulder, the restoring spring designed as a screw spring (44), the other end of which is supported by a shoulder of the release bush (40).

7. Pulling handle in accordance with claims 3 to 6,
characterized in that the front end of the release bush (40) has snap hooks (46) which slide in the grooves (48) of the angled segment recess (32) and in the starting position are supported on a shoulder of the angled segment recess.

8. Device with a pulling handle in accordance with claim 1,
characterized by a reeling-in device which can be fixed on a stick, particularly on a telescopic stick, and which is for the traction rope (16) operable via the pulling handle (20), and which has a stick fixing bush (12) for the use of the lower stick end and a rope spool (14), under spring tension, within its housing (10).

9. Pulling handle in accordance with claim 8,
characterized in that a soft rubber insert (24) is provided on the lower part of the reeling-in housing (10).

## Revendications

1. Poignée à tirer (20) pour un câble de traction (16) permettant d'actionner un outil fixé à l'extrémité d'un manche, notamment une cisaille de jardinier ou un autre outil convenant pour ébrancher ou tailler des arbres en place, la poignée à tirer (20) présentant un canal traversant (30) et un dispositif de serrage (32) pour le câble de traction (16),
**caractérisée** en ce que le canal traversant est réalisé sous la forme d'un trou débouchant (30) disposé centralement et le dispositif de serrage est réalisé sous la forme d'un évidement (32) en forme de secteur d'angle, qui se raccorde intérieurement au trou débouchant (30) et présente sur les côtés des nervures de serrage (34) qui convergent vers le trou débouchant, et en ce que les nervures de serrage convergentes (34) sont disposées sur les côtés dans l'évidement (32) en forme de secteur d'angle de telle sorte que la poignée à tirer est bloquée par serrage lorsqu'elle se trouve en position oblique par rapport au câble.

2. Poignée à tirer selon la revendication 1, **caractérisée** en ce qu'elle présente une rainure ouverte (36) courbée en méandres pour mettre en place un câble.

3. Poignée à tirer selon la revendication 1, **caractérisée** par un dispositif de libération (40, 42) à actionnement manuel, qui dégage le câble (16) des nervures de serrage (34) de l'évidement (32) en forme de secteur d'angle.

4. Poignée à tirer selon la revendication 3, **caractérisée** en ce qu'une douille de libération (40), guidant le câble de traction (16), peut être enfoncée dans le trou débouchant (30) dans la région de l'évidement (32) en forme de secteur d'angle.

5. Poignée à tirer selon la revendication 4, **caractérisée** en ce que la douille de libération (40), qui peut être ramenée en position initiale par un ressort (44), est assemblée à un élément (42) de saisie par les doigts.

6. Poignée à tirer selon la revendication 5, **caractérisée** en ce qu'une douille de montage (38) est formée sur la poignée à tirer (20), qui guide la douille de libération (40) et soutient par un épaulement annulaire le ressort de rappel réalisé sous forme de ressort à boudin (44), dont l'autre extrémité est soutenue par un épaulement de la douille de libération (40).

7. Poignée à tirer selon les revendications 3 à 6, **caractérisée** en ce que l'extrémité avant de la douille de libération (40) porte des crochets d'enclenchement (46), qui glissent dans des rainures (48) de l'évidement (32) en forme de secteur d'angle et sont soutenus, en position de libération, contre un épaulement dudit évidement.

8. Dispositif avec une poignée à tirer selon la revendication 1, **caractérisé** par un enrouleur pouvant être fixé sur un manche, notamment sur un manche télescopique, pour le câble de traction (16) pouvant être actionné au moyen de la poignée à tirer (20), enrouleur qui présente une douille (12) de fixation au manche pour insérer l'extrémité inférieure du manche, et une bobine de câble (14) se trouvant sous précontrainte de ressort à l'intérieur de son boîtier (10).

9. Dispositif selon la revendication 8, **caractérisé** en ce qu'une pièce d'insertion (24) en caoutchouc mou est prévue sur la partie inférieure du boîtier d'enrouleur (10).
